(19)

Europäisches
Patentamt
European
Patent Office
Office européen
des brevets

(11) **EP 2 518 184 A1**

(12) **EUROPEAN PATENT APPLICATION**
published in accordance with Art. 153(4) EPC

(43) Date of publication:
**31.10.2012 Bulletin 2012/44**

(21) Application number: **10839586.4**

(22) Date of filing: **24.12.2010**

(51) Int Cl.:
***C23F 11/00*** *(2006.01)*

(86) International application number:
**PCT/JP2010/073419**

(87) International publication number:
**WO 2011/078357 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2009 JP 2009294324**

(71) Applicant: **Furukawa Electric Co., Ltd.
Chiyoda-ku
Tokyo 100-8322 (JP)**

(72) Inventors:
• **SHINOZAKI, Kensaku
Tokyo 100-8322 (JP)**
• **SUZUKI, Akitoshi
Tokyo 100-8322 (JP)**
• **TSURUTA, Takahiro
Tokyo 100-8322 (JP)**

(74) Representative: **Rupp, Christian
Mitscherlich & Partner
Patent- und Rechtsanwälte
Sonnenstraße 33
80331 München (DE)**

(54) **COPPER FOIL AND METHOD FOR PRODUCING COPPER FOIL**

(57) Disclosed is a surface-treated copper foil, which exhibits excellent weldability when copper foils or a copper foil and an other metal are welded with each other by ultrasonic welding. Specifically disclosed is a surface-treated copper foil which is characterized in that an organic antirust coating film is formed on at least one surface of the copper foil and the reciprocal of the electric double layer capacity representing the thickness of one surface (1/C) is 0.3-0.8 $cm^2/\mu F$. The organic antirust coating film is formed from a triazole compound, a dicarboxylic acid and an amine, or alternatively formed from a tetrazole compound, a dicarboxylic acid and an amine.

EP 2 518 184 A1

**Description**

Technical Field

The present invention relates to a copper foil.
The present invention particularly relates to a copper foil excellent in ultrasonic weldability which is enables welding of copper foils with each other or a copper foil and another metal material by the ultrasonic welding method and to a method of production of the same.

Background Art

In the case of electronic components used in automobiles etc., along with the increasing density of mounting in recent years, the electrical connections are required to be made higher in reliability. In particular, more reliable connection is required for the joint parts of terminals and dissimilar (different kind) metals such as copper foil.
Further, in recent years, connection of copper foils with each other as negative electrode current collectors of lithium ion secondary batteries or other non-aqueous secondary batteries or connection of copper foil with tab terminals has been carried out by ultrasonic welding. A strong joint strength has been required.
One of the welding methods satisfying such requirements is ultrasonic welding.
The ultrasonic welding method applies ultrasonic vibration in a state while applying a constant pressure to the joint surfaces, whereupon the joint surfaces are rubbed together, oxide film or impurities are mechanically cleaned off, and atomic diffusion is induced whereby the surfaces are jointed with each other.
In this ultrasonic welding method, the joint temperature is lower compared with resistance welding, therefore the welded object is rarely damaged. In particular, in joint dissimilar (different kind) metals with each other, there is the advantage that no fragile products are seen at the joint and the cost is low.
In general, there is known that a strong joint strength is obtained if strengthening the welding conditions such as vibration, pressure and time of the ultrasonic welding, but it suffers from the disadvantage that consumption of the tip and anvil on the front end of the horn becomes faster. The tip and anvil are expensive, therefore various conditions for providing strong joint strength even under weak welding conditions have been sought from the viewpoint of costs.
A copper foil not treated at its surface for rustproofing is better in weldability. However, unless rustproofing is applied, the surface of the copper foil ends up being easily oxidized in the atmosphere, so the foil is not suitable for practical use. In order to prevent this oxidation of the surface of copper foil, a method of forming an antirust coating is known. As the method of formation of an antirust coating, a method of treatment by chromate in an acidic bath (pH: 1 to 2) to form a hydrated chromium oxide film called a "chromate conversion coating" and a method of dipping the material in a solution containing a triazole compound and a tetrazole compound to form an organic antirust coating are known.
A copper foil to which the antirust coating is applied in this way is resistant to discoloration in the atmosphere. On the other hand, when the antirust coating is thick, the situation sometimes arises that the joint strength by the ultrasonic welding is not sufficient. The reason for that is thought to be that the antirust coating covers the surface of the copper foil, so even if applying ultrasonic vibration, the surface is hard to clean and pure copper does not appear on the surface, so atomic diffusion is difficult and the joint strength is weakened.
The present inventors previously proposed to thinly form hydrated chromium oxide on the surface of a copper foil to obtain a copper foil which is excellent in ultrasonic weldability (see Patent Literature 1: JPP 2009-068042-A). However, treatment by hydrated chromium oxide requires handling of a chromium metal, so it is necessary to pay attention to environmental issues. Further, it is pointed out that a hydrated chromium oxide coating is not suitable for high temperature treatment depending on the heating conditions.
In this regard, one of conditions governing the performance of a non-aqueous secondary battery is the adhesion of the collector and active material. When employing a copper foil as the collector of a battery, the experimental finding has been obtained that the adhesion strength of the collector (copper foil) and the active material falls due to the presence of a hydrated chromium oxide coating on the surface of the copper foil as an antirust coating.
Further, in a non-aqueous secondary battery, it becomes necessary to performing heating (drying) at 100 to 160°C for a few minutes to 10 minutes or so in the process of placing an active material at the collector (copper foil). The experimental finding has been obtained that when an oxide film having a certain thickness or more is formed on the surface of the copper foil by this heating, this exerts an adverse effect upon the characteristics of the battery. Also, the surface becomes hard to clean as explained above, therefore an adverse effect is exerted upon the ultrasonic weldability.
Further, Patent Literature 2: Japanese Patent No. 3581784 proposes that a copper foil which is formed with an antirust coating having a reciprocal value of an electric double layer capacity, representing the thickness of the surface (1/C), of not more than 0.1 to 0.3 $cm^2/\mu F$ as being excellent as a copper foil for the negative electrode current collector of a non-aqueous secondary battery. However, even if the 1/C value is within this range, with rustpoofing by just coating a triazole corrosion inhibitor alone, the affinity between the triazole corrosion inhibitor and the solvent is insufficient. A portion of the triazole corrosion inhibitor component sometimes becomes a powder and emerges on the surface of the copper foil in a drying process after coating the corrosion inhibitor or a drying process in the production of the non-aqueous secondary battery.

If a powder of a triazole corrosion inhibitor emerging on the surface of the copper foil remains present on the surface of the copper foil, it will obstruct the adhesion between the collector (copper foil) and the active material, when using the copper foil as the negative electrode current collector of a non-aqueous secondary battery. Further, at the time of the ultrasonic welding, the copper foil surface remains in an uncleaned state due to this powder, therefore an adverse effect is exerted upon the ultrasonic weldability.

Citations List

Patent Literature

PLT 1: Japanese Patent Publication (A) No. 2009-068042
PLT 2: Japanese Patent No. 3581784

Summary of Invention

Technical Problem

The present inventors discovered that the type of the antirust coating formed on the surface of the copper foil and its thickness greatly influence the ultrasonic weldability (joint strength) in a case of ultrasonically welding a plurality of copper foils with each other or a case of ultrasonically welding a copper foil and other metal for example a tab terminal and thereby completed the present invention.

Further, the present inventors discovered that the joint strength of a copper foil by ultrasonic welding is also influenced by the roughness (Rz) of the surface of the copper foil. That is, when applying ultrasonic vibration to copper foils having rough surface roughness so as to join them with each other, the copper foils having rough surface roughnesses are weak in joint strength. This is conjectured to be because the contact at the time of joint becomes local due to the roughness (Rz), joint occurs in at projecting parts of relief shapes, but joint does not occur at recessed parts, so the joint strength becomes smaller.

For this reason, there have been increasingly strong demands for copper foil excellent in the weldability between one copper foil and another copper foil or between a copper foil and a dissimilar metal and excellent in the adhesion with the active material and in high temperature stability when employing the copper foil as the collector of a battery.

Further, the present inventors discovered that the joint strength of a copper foil by ultrasonic welding is influenced by the presence of any powder which emerges on the surface of the copper foil explained above. That is, it was conjectured that if a powder of the corrosion inhibitor is present on the surface of the copper foil, the contact area between one copper foil and another copper foil or between the copper foil and a dissimilar metal becomes small at the time of the ultrasonic welding since the powder of the corrosion inhibitor becomes an obstacle, the portion with the powder is not sufficiently cleaned, and therefore the joint strength becomes small.

Accordingly, provision of a copper foil excellent in ultrasonic weldability when joint copper foils with each other or a copper foil with another metal by ultrasonic welding, has been desired.

Further, provision of a method of surface treatment of a copper foil has been desired.

Furthermore, provision of a copper foil excellent in ultrasonic weldability and excellent in the adhesion with an active material as a collector of a battery, has been desired. Solution to Problem

The present invention provides a surface-treated copper foil, wherein, on at least one surface of a copper foil an organic antirust coating having a reciprocal value of an electric double layer capacity representing thickness (1/C) exceeding 0.3 $cm^2/\mu F$, but not more than 0.8 $cm^2/\mu F$, is formed, and a method of production of the same.

Preferably the organic antirust coating is formed from a triazole compound, dicarboxylic acid, and amine or from a tetrazole compound, dicarboxylic acid, and amine.

One method of production of the surface-treated copper foil of the present invention is characterized by forming on at least one surface of a copper foil an organic antirust coating having a reciprocal value of an electric double layer capacity representing the surface thickness (1/C) of 0.3 to 0.8 $cm^2/\mu F$ by bringing the surface of the copper foil into contact with a solution containing a triazole compound, dicarboxylic acid, and amine and drying it.

Another method of production of the surface-treated copper foil of the present invention is characterized by forming on at least one surface of a copper foil an organic antirust coating having a reciprocal value of an electric double layer capacity representing the surface thickness (1/C) of 0.3 to 0.8 $cm^2/\mu F$ by bringing the surface of the copper foil into contact with a solution containing a tetrazole compound, dicarboxylic acid, and amine and drying it.

A roughness Rz (10-point mean roughness defined by JIS B 0601-1994) of at least the surface of the copper foil on which the organic antirust coating is formed is preferably 2.0 $\mu$m or less.

Advantageous Effects of Invention

According to the present invention, a surface-treated copper foil excellent in weldability between copper foils or between a copper foil and another metal by ultrasonic welding can be provided.

Further, the method of surface treatment of a copper foil excellent in ultrasonic weldability of the present invention enables the easy production of a surface-treated copper foil excellent in weldability between copper foils or between a copper foil and another metal by ultrasonic welding.

Furthermore, the present invention can provide a surface-treated copper foil excellent in ultrasonic weldability and excellent in adhesion with an active material as a collector of a battery.

Description of Embodiments

In the surface-treated copper foil of this embodiment of the present invention, an organic antirust coating having a reciprocal value of an electric double layer capacity representing thickness of the surface (1/C) exceeding 0.3 cm$^2$/$\mu$F, but not more than 0.8 cm$^2$/$\mu$F, is formed on at least one surface of a copper foil (in the embodiments of the present invention, when it is not necessary to individually express an electrolytic copper foil or a rolled copper foil, these are expressed all together as "copper foil").

Note that, the thickness of the organic antirust coating was calculated by measuring the electric double layer capacity of the copper foil surface (C: $\mu$F) by a commercially available direct read type electric double layer capacity measuring instrument and finding the reciprocal value (1/C) of that as shown in Equation (1).

$$1/C = A \cdot d + B \ldots \quad (1)$$

(where, "d" is the thickness of the electric double layer formed on the copper foil surface, and A and B are constants)

The reciprocal (1/C) value of the electric double layer capacity in the surface-treated copper foil of this embodiment of the present invention is set within a range of 0.3 to 0.8 cm$^2$/$\mu$F.

In a state where the 1/C value is lower than 0.1 cm$^2$/$\mu$F, the thickness of the antirust coating is insufficient, and contact between moisture in the atmosphere and the copper surface cannot be sufficiently prevented at room temperature, therefore oxidation and/or discoloration of the surface easily occurs at the time of storage and/or transportation. Further, when it is within a range of 0.1 to 0.3 cm$^2$/$\mu$F, oxidation and/or discoloration of the surface at the time of the storage and/or transportation does not easily occur, however, under a high temperature environment of 100 to 160°C such as a drying process in the production of the negative electrode current collector of a non-aqueous secondary battery, the strength of the antirust coating becomes insufficient for preventing oxidation, and the thickness of the oxide film excessively increases, therefore the weldability falls. Further, if it exceeds 0.8 cm$^2$/$\mu$F, the discoloration and oxidation become difficult, but the thickness of the antirust coating becomes excessive, therefore the joint strength falls.

The reason why the thickness of the organic antirust coating influences the weldability is considered to be that since the organic antirust coating covers the surface of the copper foil as explained above, when the coating is thick, the surface is hard to clean even if ultrasonic vibration is applied, so pure copper does not appear on the surface, therefore atomic diffusion becomes difficult and the joint strength is weak.

The joint strength of ultrasonic welding is also influenced by the roughness of the surface of the copper foil. When applying ultrasonic vibration to copper foil with a roughness which exceeds 2.0 $\mu$m in the value of the ten-point mean roughness (Rz) prescribed in JIS B 0601-1994, the joint strength becomes smaller.

When ultrasonically welding copper foils with Rz's exceeding 2.0 $\mu$m and observing a cross-section of the joints of those copper foils, many voids are formed. The reason for this is considered to be that due to the roughness, the contact at the time of joint is localized, that is, joint occurs at the projecting parts of the relief shapes, but joint does not occur between the recessed parts, so those parts become voids and the joint strength becomes smaller.

In the surface-treated copper foil of this embodiment of the present invention, preferably at least one surface of the copper foil is formed with an organic antirust coating by immersing the copper foil in a solution comprised of a triazole compound, dicarboxylic acid, and amine or comprised of a tetrazole compound, dicarboxylic acid, and amine.

In this embodiment of the present invention, as the triazole compound, there can be mentioned benzotriazole, tolyltriazole, carboxybenzotriazole, chlorobenzotriazole, ethyl benzotriazole, naphthotriazole, etc.

In this embodiment of the present invention, as the tetrazole compound, there can be mentioned 1H-tetrazole-monoethanolamine salt etc.

As the dicarboxylic acid in this embodiment of the present invention, there can be mentioned oxalic acid, malonic acid, succinic acid, glutaric acid, adipic acid, pimelic acid, phthalic acid etc.

In this embodiment of the present invention, as the amine, there are monoalkylamine, dialkylamine, trialkylamine, monocyclohexylamine, dicyclohexylamine, and other monoamines, diamine substituted with 1 to 4 alkyl groups, alkylmonoamine, alkyldiamine etc. in which at least one of alkyl groups has a hydrophilic group such as a hydroxyl group or polyoxyethylene group. Specifically, there can be mentioned monoethanolamine, diethanolamine, triethanolamine, dimethylethanolamine, diethylethanolamine, monomethyl ethanolamine, monoethyl ethanolamine, monobutyl ethanolamine, etc.

As the ratio of mixture of the triazole compound, dicarboxylic acid, and amine, by weight, about 0.4 to 2 times the dicarboxylic acid and about 0.5 to 2 times the amine relative to the triazole compound are effective. This is because even if 2 or more times the dicarboxylic acid is added, no improvement of rust prevention function can be hoped for anymore. Further, if it becomes lower than 0.4 time, no rust prevention function effect is exhibited. Further, even if 2 or more times the amine is added, no improvement of the rust prevention function can be hoped for anymore. Further, if it becomes lower than 0.5 time, no effect of improving the affinity of the triazole compound with the solvent comprised of water is exhibited. The concentration of the solution of the triazole compound, dicarboxylic acid, and amine for forming the antirust coating on the surface of the copper foil is desirably controlled to 50 to 6,000 ppm. This is because if it becomes lower than 50 ppm, an organic antirust coating which is thick enough to keep the rust prevention function is not formed, while if it exceeds 6,000 ppm, the organic antirust coating becomes thick and impedes the joint conditions in the ultrasonic welding, and not that much of an effect of improving the rust prevention function can be hoped for.

The pH of the solution of the triazole compound, dicarboxylic acid, and amine is preferably 6 to 9. Further, the temperature of the solution at the time of formation of the coating on the surface of the copper foil should be 30 to 70°C. However, the solution may be further heated for use according to need. Note that, if the temperature of the solution is made less than 30°C, the antirust coating which is formed becomes fragile, therefore contact of the copper with the moisture in the atmosphere cannot be completely prevented, and improvement of the rust prevention function cannot be expected.

As the ratio of mixture of the tetrazole compound, dicarboxylic acid, and amine, by weight, about 0.4 to 2 times the dicarboxylic acid and 0.5 to 2 times the amine relative to the tetrazole compound are effective. This is because even if 2 or more times the dicarboxylic acid is added, no improvement of the rust prevention function can be hoped for anymore. Further, if it becomes lower than 0.4 time, the rust prevention function effect is not manifested. Further, even if adding 2 or more times the amine, no improvement of the rust prevention function can be hoped for anymore. Further, if it becomes lower than 0.5 time, the effect of improving the affinity of the tetrazole compound with the solvent is not manifested.

The total concentration in the solution of the tetrazole compound, dicarboxylic acid, and amine for forming the antirust coating on the surface of the copper foil is desirably made 50 to 6,000 ppm. This is because, if it becomes lower than 50 ppm, an organic antirust coating which is thick enough to keep the rust prevention function is not formed, while if it exceeds 6,000 ppm, the thickness of the organic antirust coating becomes too thick and impedes the joint condition in the ultrasonic welding and not that much of an effect of improving the rust prevention function can be hoped for.

The pH of the solution of the tetrazole compound, dicarboxylic acid, and amine is preferably 6 to 9. Further, the temperature of the solution at the time of formation of the coating on the surface of the copper foil should be 30 to 70°C. However, the solution may be further heated for use as well according to need. Note that, if the temperature of the solution is made less than 30°C, the antirust coating which is formed becomes fragile, therefore contact of the copper with the moisture in the atmosphere cannot be completely prevented, and no improvement of the rust prevention function can be hoped for.

The immersion time of the copper foil in the solution is suitably determined by the relationships among the solution concentrations of the triazole compound, tetrazole compound, dicarboxylic acid, and amine, the solution temperature, and the thickness of the formed organic antirust coating, but usually should be about 0.5 to 30 seconds.

In the method of forming the organic antirust coating, in the case of electrolytic copper foil, acid cleaning is carried out and washing or washing/drying are carried out. After that, the copper foil is dipped in a solution of a corrosion inhibitor obtained by adding a dicarboxylic acid and amine to a triazole compound or a solution of a corrosion inhibitor obtained by adding a dicarboxylic acid and amine to a tetrazole compound to thereby form an organic antirust coating. Note that, due to exposure to the atmosphere after performing acid cleaning and washing or washing and drying and before the copper foil is dipped in the solution of the corrosion inhibitor, a very thin film of copper oxide of about 20Å is sometimes formed on the surface of the copper foil. However, this does not have any effect on the representative features of the present invention such as ultrasonic weldability and resistance to discoloration. Further, as the solvent, according to the type of the triazole compound or tetrazole compound, use is made of water or a hydrocarbon-based solvent. However, the advantageous effect of the present invention does not change whichever of these is used.

In the case of rolled copper foil, rolling oil remaining on the surface is removed by degreasing, the degreased copper foil is subjected to the washing or washing and drying treatment, and the degreased copper foil is dipped in a solution of a corrosion inhibitor obtained by adding a dicarboxylic acid and amine to a triazole compound or a solution of a corrosion inhibitor obtained by adding a dicarboxylic acid and amine to a tetrazole compound to thereby form the organic antirust coating. Note that, due to exposure to the atmosphere after degreasing and after acid cleaning and washing or washing/drying and before the copper foil is dipped in the solution of a corrosion inhibitor, a very thin film of copper oxide of about 20Å is sometimes formed on the surface of the copper foil. However, this does not affect the representative features of the present invention such as ultrasonic weldability. Further, as the solvent, use is made of water or a hydrocarbon-based solvent according to the type of the triazole compound or tetrazole compound. However, the advantageous effect of the present invention does not change whichever of these is used.

As a treatment method before treating the surface of the copper foil by the organic corrosion inhibitor, a method of immersion in dilute sulfuric acid of $H_2SO_4$ = 50 to 200 g/l and a temperature of 10 to 80°C is effective for acid cleaning. Further, in the case of degreasing, cathodic or/and anodic electrolytic degreasing is effectively carried out in an aqueous solution of NaOH = 5 to 200 g/l at a temperature of 10 to 80°C and a current density of 1 to 10 A/dm$^2$ for 0.1 minute to 5 minutes.

[Examples and Comparative Examples]

[Production of copper foils]

Electrolytic solution
Copper: 70 to 130 g/l
Sulfuric acid: 80 to 140 g/l
Additive: Sodium 3-mercapto-1-propane sulfonate = 1 to 10 ppm
Hydroxyethyl cellulose = 1 to 100 ppm
Low molecular weight glue (molecular weight of 3,000) = 1 to 50 ppm
Concentration of chloride ions = 10 to 50 ppm
Temperature: 50 to 60°C

An electrolytic copper foil having a thickness of 6 to 20 $\mu$m was produced at a current density of 50 to 100 A/dm$^2$ by using this electrolytic solution and using a precious metal oxide-coated titanium electrode for the anode and a rotating drum made of titanium for the cathode. The surface roughnesses (Rz) of the two surfaces of each produced copper foil are shown in Table 1.

[Table 1]

| | Benzotriazole concentration (ppm) | Malonic acid concentration (ppm) | Tetraethylamine concentration (ppm) | Solution temp. (°C) | Glossy surface roughness (Rz) | Matte surface roughness (Rz) | Foil thickness ($\mu$m) |
|---|---|---|---|---|---|---|---|
| Ex. 1 | 50 | 20 | 60 | 30 | 1.62 | 1.53 | 12 |
| Ex. 2 | 150 | 60 | 180 | 30 | 1.43 | 1.36 | 6 |
| Ex. 3 | 250 | 100 | 300 | 30 | 1.38 | 1.26 | 18 |
| Ex. 4 | 150 | 60 | 180 | 50 | 1.40 | 1.27 | 20 |
| Ex. 5 | 150 | 60 | 180 | 70 | 1.62 | 1.53 | 12 |
| Ex. 6 | 500 | 200 | 600 | 50 | 1.28 | 1.17 | 14 |
| Ex. 7 | 1000 | 400 | 1200 | 50 | 1.38 | 1.26 | 18 |
| Ex. 8 | 2000 | 800 | 2400 | 50 | 1.56 | 1.53 | 8 |
| Ex. 9 | 250 | 50 | 300 | 30 | 1.62 | 1.53 | 12 |
| Comp. Ex. 1 | 50 | | | 30 | 1.62 | 1.53 | 12 |

(continued)

| | Benzotriazole concentration (ppm) | Malonic acid concentration (ppm) | Tetraethylamine concentration (ppm) | Solution temp. (°C) | Glossy surface roughness (Rz) | Matte surface roughness (Rz) | Foil thickness (μm) |
|---|---|---|---|---|---|---|---|
| Comp. Ex. 2 | 250 | | | 30 | 1.43 | 1.36 | 6 |
| Comp. Ex. 3 | 500 | | | 30 | 1.38 | 1.26 | 18 |
| Comp. Ex. 4 | 2000 | | | 30 | 1.40 | 1.27 | 20 |
| Comp. Ex. 5 | 50 | 20 | | 30 | 1.62 | 1.53 | 12 |
| Comp. Ex. 6 | 250 | 100 | | 30 | 1.28 | 1.17 | 14 |
| Comp. Ex. 7 | 500 | 200 | | 30 | 1.62 | 1.53 | 18 |
| Comp. Ex. 8 | 2000 | 800 | | 30 | 1.56 | 1.43 | 8 |
| Comp. Ex. 9 | 50 | | 60 | 30 | 1.43 | 1.29 | 10 |
| Comp. Ex. 10 | 250 | | 180 | 30 | 1.62 | 1.53 | 12 |
| Comp. Ex. 11 | 500 | | 300 | 30 | 1.43 | 1.29 | 10 |
| Comp. Ex. 12 | 2000 | | 180 | 30 | 1.29 | 1.16 | 16 |
| Comp. Ex. 13 | 500 | 100 | 600 | 20 | 1.38 | 1.26 | 18 |
| Comp. Ex. 14 | 500 | 100 | 600 | 20 | 1.38 | 1.26 | 18 |
| Comp. Ex. 15 | 1000 | 400 | 1200 | 30 | 2.22 | 2.38 | 14 |

| | Chromic acid concentration | Solution Temperature (°C) | Glossy surface Roughness (RX) | Matte surface Roughness (RX) | Foil thickness (μm) |
|---|---|---|---|---|---|
| | | | | | |
| Comp. Ex. 16 | 1000 | 30 | 1.29 | 1.16 | 16 |

[Organic compound for forming coating]

The produced copper foils were dipped in antirust solutions having the compositions shown in Table 1 to form antirust coatings on the surfaces of the copper foils. Note that, the liquid temperatures were set to 20 to 70°C, and pH were set to 6 to 9.

[Antirust solutions]

Triazole compound: Benzotriazole
Tetrazole compound: 1H-tetrazole/monoethanolamine salt
Dicarboxylic acid: Malonic acid
Amine: Triethanolamine

[chromate treatment]

The copper foils were dipped in an aqueous solution in which $CrO_3$ = 1 g/l was dissolved, then were dried.

[Thickness of organic antirust coating formed on surface]

Electric double layer capacities (C:$\mu$F) were measured, and thicknesses of dielectric layers of the copper foil surfaces provided with the prepared antirust coatings were measured based on the following equation.

$$1/C = A^.d+B... \quad (1)$$

where, "d" is the thickness of the electric double layer formed on the copper foil surface, and A and B are constants. Note that, for the measurement of 1/C, use was made of a chemical impedance meter HIOKI3532-80 made by HIOKI E.E. The values of the measurement results (1/C) are shown in Table 2. Further, the chromate deposition amounts are shown in Table 3. The chromate coating cannot be evaluated by 1/C, therefore the chromium deposition amounts in the chromate treatment are shown in Table 3.
[Table 2]

|  | 1/C value | |
| --- | --- | --- |
|  | M surface | S surface |
| Ex. 1 | 0.338 | 0.493 |
| Ex. 2 | 0.369 | 0.541 |
| Ex. 3 | 0.416 | 0.613 |
| Ex. 4 | 0.490 | 0.684 |
| Ex. 5 | 0.537 | 0.780 |
| Ex. 6 | 0.559 | 0.854 |
| Ex. 7 | 0.520 | 0.670 |
| Ex. 8 | 0.795 | 0.814 |
| Ex. 9 | 0.644 | 0.698 |
| Comp. Ex. 1 | 0.102 | 0.113 |
| Comp. Ex. 2 | 0.107 | 0.116 |
| Comp. Ex. 3 | 0.111 | 0.120 |
| Comp. Ex. 4 | 0.141 | 0.156 |
| Comp. Ex. 5 | 0.153 | 0.170 |
| Comp. Ex. 6 | 0.161 | 0.174 |
| Comp. Ex. 7 | 0.167 | 0.180 |
| Comp. Ex. 8 | 0.212 | 0.234 |

(continued)

| | 1/C value | |
|---|---|---|
| | M surface | S surface |
| Comp. Ex. 9 | 0.179 | 0.198 |
| Comp. Ex. 10 | 0.187 | 0.203 |
| Comp. Ex. 11 | 0.194 | 0.210 |
| Comp. Ex. 12 | 0.247 | 0.273 |
| Comp. Ex. 13 | 0.132 | 0.140 |
| Comp. Ex. 14 | 0.126 | 0.132 |
| Comp. Ex. 15 | 0.518 | 0.645 |

[Table 3]

| Chromate amounts (mg/dm$^2$) | | |
|---|---|---|
| | M surface | S surface |
| Comp. Ex. 16 | 0.02 | 0.02 |

[Comparison of oxidation resistance and presence/absence of emergence of corrosion inhibitor ingredient]
If employing the surface-treated copper foil of the embodiment of the present invention as the collector of an Li ion secondary battery, the active material is coated on the collector (copper foil) in the electrode manufacturing process of the battery, then it is dried at 100 to 160°C. If this drying is insufficient and moisture is brought into the Li ion secondary battery, a large influence is exerted upon the cycle characteristics of the battery and its charge/discharge capacity. For this reason, the copper foil is demanded to be resistant to oxidation in this drying process. Therefore, the oxidation resistances of the examples and comparative examples were measured.
The measurement was performed after heating the surface-treated copper foil in an air oven at 160°C for 10 minutes, then using a cathodic reduction method. The measurement results are shown in Table 4.
Further, presence of emergence of the corrosion inhibitor (powder) after heating (no emergence of powder = good, emergence = poor) was observed. The results are shown in Table 5.

[Constant temperature and humidity test and its results]

The prepared surface-treated copper foil was allowed to stand in a constant temperature and humidity tank set to a temperature of 60°C and humidity of 90% for 10 days, then appearance was observed, and the degree of deterioration was evaluated. The evaluation results are described in Table 4.
The evaluation was "good" for foils having no abnormalities seen on the surface, "fair" for foils somewhat discolored, and "poor" for foils showing discoloration.
[Table 4]

| Thicknesses Of Oxide Films After Heating And Appearance After Standing At Constant Temperature Of 60°C And Constant Humidity Of 90% For 10 Days | | | | |
|---|---|---|---|---|
| | Oxidation amount (A) after 10 minutes at 160°C | | Appearance after constant temperature and humidity | |
| | Glossy surface | Matte surface | Glossy surface | Matte surface |
| Ex. 1 | 248 | 217 | Good | Good |
| Ex. 2 | 220 | 202 | Good | Good |
| Ex. 3 | 196 | 192 | Good | Good |

(continued)

| Thicknesses Of Oxide Films After Heating And Appearance After Standing At Constant Temperature Of 60°C And Constant Humidity Of 90% For 10 Days | | | | |
|---|---|---|---|---|
| | Oxidation amount (A) after 10 minutes at 160°C | | Appearance after constant temperature and humidity | |
| | Glossy surface | Matte surface | Glossy surface | Matte surface |
| Ex. 4 | 194 | 189 | Good | Good |
| Ex. 5 | 188 | 176 | Good | Good |
| Ex. 6 | 195 | 179 | Good | Good |
| Ex. 7 | 212 | 182 | Good | Good |
| Ex. 8 | 193 | 187 | Good | Good |
| Ex. 9 | 197 | 186 | Good | Good |
| Comp. Ex. 1 | 362 | 335 | Poor | Poor |
| Comp. Ex. 2 | 345 | 328 | Poor | Poor |
| Comp. Ex. 3 | 333 | 307 | Poor | Poor |
| Comp. Ex. 4 | 314 | 310 | Poor | Poor |
| Comp. Ex. 5 | 341 | 311 | Fair | Fair |
| Comp. Ex. 6 | 320 | 302 | Fair | Fair |
| Comp. Ex. 7 | 315 | 290 | Fair | Fair |
| Comp. Ex. 8 | 297 | 293 | Fair | Fair |
| Comp. Ex. 9 | 328 | 301 | Fair | Fair |
| Comp. Ex. 10 | 311 | 297 | Fair | Fair |
| Comp. Ex. 11 | 306 | 294 | Fair | Fair |
| Comp. Ex. 12 | 291 | 283 | Fair | Fair |
| Comp. Ex. 13 | 340 | 314 | Poor | Poor |
| Comp. Ex. 14 | 320 | 301 | Poor | Poor |
| Comp. Ex. 15 | 224 | 209 | Good | Good |
| Comp. Ex. 16 | 432 | 385 | Poor | Poor |

[Table 5]

| | emergence of powder | |
|---|---|---|
| | Glossy surface | Matte surface |
| Ex. 1 | Good | Good |
| Ex. 2 | Good | Good |
| Ex. 3 | Good | Good |
| Ex. 4 | Good | Good |
| Ex. 5 | Good | Good |
| Ex. 6 | Good | Good |
| Ex. 7 | Good | Good |

(continued)

| | emergence of powder | |
|---|---|---|
| | Glossy surface | Matte surface |
| Ex. 8 | Good | Good |
| Ex. 9 | Good | Good |
| Comp. Ex. 1 | Poor | Poor |
| Comp. Ex. 2 | Poor | Poor |
| Comp. Ex. 3 | Poor | Poor |
| Comp. Ex. 4 | Poor | Poor |
| Comp. Ex. 5 | Poor | Poor |
| Comp. Ex. 6 | Poor | Poor |
| Comp. Ex. 7 | Poor | Poor |
| Comp. Ex. 8 | Poor | Poor |
| Comp. Ex. 9 | Good | Good |
| Comp. Ex. 10 | Good | Good |
| Comp. Ex. 11 | Good | Good |
| Comp. Ex. 12 | Good | Good |
| Comp. Ex. 13 | Poor | Poor |
| Comp. Ex. 14 | Poor | Poor |
| Comp. Ex. 15 | Good | Good |
| Comp. Ex. 16 | Good | Good |

[Evaluation of the weldability of ultrasonic welding]

The conditions of the ultrasonic welding are shown in Table 6. The copper foils of the examples and comparative examples were ultrasonically welded under the conditions of Table 6 to tab terminals made of the materials shown in Table 7. The results are shown in Table 8. Note that, the evaluation results are indicated as "good" for cases where all of the superposed copper foils are completely welded with the opposing tab terminal, as "fair" for cases wherein the opposing tab terminal could be welded with, but the welding between the superposed copper foils was insufficient, and as "poor" for cases where the welding between the copper foils and the opposing tab terminal was insufficient.

[Table 6]

| Conditions of ultrasonic welding | | | | |
|---|---|---|---|---|
| Conditions | Amplitude | Pressure | Time | Frequency |
| Content | 80% 100%=47 $\mu$m | 40 PSI | 0.3S | 20 kHz |

[Table 7]

| Tab material | Tab thickness | Copper foil thickness | Number of copper foils | Type of copper foils |
|---|---|---|---|---|
| Copper plate | 200$\mu$m | 10$\mu$m | 50 | Electrolytic foils |

[Table 8]

| Weldability | |
|---|---|
| Ex. 1 | Good |
| Ex. 2 | Good |
| Ex. 3 | Good |
| Ex. 4 | Good |
| Ex. 5 | Good |
| Ex. 6 | Good |
| Ex. 7 | Good |
| Ex. 8 | Good |
| Ex. 9 | Good |
| Comp. Ex. 1 | Poor |
| Comp. Ex. 2 | Poor |
| Comp. Ex. 3 | Poor |
| Comp. Ex. 4 | Poor |
| Comp. Ex. 5 | Fair |
| Comp. Ex. 6 | Fair |
| Comp. Ex. 7 | Fair |
| Comp. Ex. 8 | Fair |
| Comp. Ex. 9 | Fair |
| Comp. Ex. 10 | Fair |
| Comp. Ex. 11 | Fair |
| Comp. Ex. 12 | Fair |
| Comp. Ex. 13 | Poor |
| Comp. Ex. 14 | Poor |
| Comp. Ex. 15 | Poor |
| Comp. Ex. 16 | Poor |

In all of Examples 1 to 8 wherein antirust coatings each containing a triazole compound, dicarboxylic acid, and amine were provided and Example 9 wherein an antirust coating containing a tetrazole compound, dicarboxylic acid, and amine was provided, the amounts of oxidation at high temperatures were suppressed to the lowest limit, and deterioration of appearance and emergence of powder were not seen. Further, even after exposure under a high temperature and humidity environment, no deterioration of appearance was seen, and the ultrasonic weldability was excellent as well. Accordingly, these surface-treated copper foils are excellent in the ultrasonic weldability, therefore assembly of electronic parts etc. becomes easy. Further, even when such copper foil is used as the collector of an Li battery or other non-aqueous secondary battery, excellent effects are brought about.

On the other hand, in Comparative Examples 1 to 4 wherein antirust coatings were formed by a solution made from only a triazole compound, the oxidation after heating at high temperature was severe. Further, due to the emergence of powder, the weldability was consequently poor. Further, the antirust films were brittle, and the function of suppressing contact of the copper foil with moisture in the atmosphere was not sufficient, therefore discoloration after exposure under the high temperature and high humidity environment was severe.

In Comparative Examples 5 to 8 wherein the antirust coatings were formed from a solution comprised of two ingredients of a triazole compound and dicarboxylic acid, the dicarboxylic acid strengthens the antirust films, therefore the discoloration after exposure under the high temperature and high humidity environment is slightly suppressed compared with Comparative Examples 1 to 4. However, the emergence of the oxide film and powder after heating at high temperature is not suppressed, so the weldability is consequently slightly inferior.

In Comparative Examples 9 to 12 wherein the antirust coatings were formed from a solution composed of two ingredients of a triazole compound and amine, affinity between the triazole compound and the solvent comprised of water was improved by the amine, so emergence of powder after heating at high temperature was not observed. However, the antirust films were brittle, the generation of an oxide film after heating at high temperature and discoloration after exposure under the high temperature and high humidity environment was not suppressed, and the weldability was consequently slightly inferior.

In Comparative Example 13 wherein the antirust coating was formed at 20°C from a solution comprised of the three ingredients of a triazole compound, dicarboxylic acid, and amine and Comparative Example 14 wherein the antirust coating was formed at 20°C from a solution comprised of the three ingredients of a tetrazole compound, dicarboxylic acid, and amine, the strengths of the formed antirust coatings were not sufficient, therefore the function of suppressing contact between the copper foils and moisture in the atmosphere was not sufficient, so the discolorations after the exposure under the high temperature and high humidity environment were severe as well. Further, the emergence of the oxide film and powder after heating at high temperature could not be suppressed, so the weldability consequently became poor.

Note that, in Comparative Example 15 wherein the ultrasonic welding was attempted for copper foil where the roughnesses (Rz) of the glossy surface and matte surface exceeded 2.0, since the Rz values of the roughness were large, the contact at the time of joint became localized and the joint strength between the copper foil and the opposing tab terminal in the welding was small, therefore the ultrasonic weldability was not sufficient.

Other than these, in Comparative Example 16 where chromate treatment was carried out, no emergence of powder occurred. However, the function of suppressing contact between the copper foil and moisture in the atmosphere was not sufficient, so the discoloration after exposure under a high temperature and high humidity environment was severe. Further, the oxide film after heating at a high temperature could not be suppressed, so the weldability consequently became poor.

As explained above, according to the present invention, there can be provided a surface-treated copper foil excellent in weldability between copper foils or between a copper foil and another metal by ultrasonic welding.

Further, according to the method of surface treatment of the copper foil excellent in ultrasonic weldability of the present invention, it is possible to easily produce a surface-treated copper foil excellent in the weldability between copper foils or between a copper foil and another metal by ultrasonic welding.

**Claims**

1. A surface-treated copper foil wherein, on at least one surface of a copper foil, an organic antirust coating having a reciprocal value of an electric double layer capacity, representing a thickness of the surface (1/C), of 0.3 to 0.8 $cm^2/\mu F$, is formed.

2. A surface-treated copper foil as set forth in claim 1, wherein the surface roughness of the surface of the copper foil on which the organic antirust coating is formed is 2.0 $\mu m$ or less in terms of the value of ten-point mean roughness (Rz) defined by JIS B 0601-1994.

3. A surface-treated copper foil as set forth in claim 1, wherein the organic antirust coating is formed from a triazole compound, dicarboxylic acid, and amine.

4. A surface-treated copper foil as set forth in claim 1, wherein the organic antirust coating is formed from a tetrazole compound, dicarboxylic acid, and amine.

5. A method of production of a surface-treated copper foil including: forming on at least one surface of a copper foil an organic antirust coating having a reciprocal value of an electric double layer capacity, representing the surface thickness (1/C), of 0.3 to 0.8 $cm^2/\mu F$ by bringing the surface of the copper foil into contact with a solution containing a triazole compound, dicarboxylic acid, and amine and drying it.

6. A method of production of a surface-treated copper foil including: forming on at least one surface of a copper foil an organic antirust coating having a reciprocal value of an electric double layer capacity, representing the surface thickness (1/C), of 0.3 to 0.8 $cm^2/\mu F$ by bringing the surface of the copper foil into contact with a solution containing a tetrazole compound, dicarboxylic acid, and amine and drying it.

7. A method of production of a surface-treated copper foil including: forming on at least one surface of a copper foil having a ten-point mean roughness (Rz) prescribed in JIS B 0601-1994 of 2.0 $\mu$m an organic antirust coating having a reciprocal value of an electric double layer capacity, representing the surface thickness (1/C), of 0.3 to 0.8 cm$^2$/$\mu$F by bringing the surface of the copper foil into contact with a solution containing a triazole compound, dicarboxylic acid, and amine and drying it.

8. A method of production of a surface-treated copper foil including: forming on at least one surface of a copper foil having a ten-point mean roughness (Rz) prescribed in JIS B 0601-1994 of 2.0 $\mu$m an organic antirust coating having a reciprocal value of an electric double layer capacity, representing the surface thickness (1/C), of 0.3 to 0.8 cm$^2$/$\mu$F by bringing the surface of the copper foil into contact with a solution containing a tetrazole compound, dicarboxylic acid, and amine and drying it.

## INTERNATIONAL SEARCH REPORT

| International application No. |
|---|
| PCT/JP2010/073419 |

### A. CLASSIFICATION OF SUBJECT MATTER
*C23F11/00*(2006.01)i

According to International Patent Classification (IPC) or to both national classification and IPC

### B. FIELDS SEARCHED

Minimum documentation searched (classification system followed by classification symbols)
C23F11/00, C23C24/00-30/00, B32B1/00-35/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 11-273683 A (The Furukawa Electric Co.,<br>Ltd.),<br>08 October 1999 (08.10.1999),<br>paragraphs [0030] to [0036]<br>(Family: none) | 1-2<br>3-8 |
| A | JP 2009-068042 A (Furukawa Circuit Foil Japan<br>Co., Ltd.),<br>02 April 2009 (02.04.2009),<br>entire text<br>(Family: none) | 1-8 |
| A | JP 07-258870 A (Mitsui Mining & Smelting Co.,<br>Ltd.),<br>09 October 1995 (09.10.1995),<br>entire text<br>(Family: none) | 1-8 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 February, 2011 (22.02.11) | 01 March, 2011 (01.03.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/073419

C (Continuation).   DOCUMENTS CONSIDERED TO BE RELEVANT

| Category* | Citation of document, with indication, where appropriate, of the relevant passages | Relevant to claim No. |
|---|---|---|
| A | JP 09-306504 A  (Sony Corp.), 28 November 1997 (28.11.1997), entire text (Family: none) | 1-8 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P2009068042 A
- JP 3581784 B

- JP 2009068042 A